# EUROPÄISCHE PATENTANMELDUNG

(11) **EP 0 944 271 A1**
(43) Veröffentlichungstag der Anmeldung: **22.09.1999**
(21) Anmeldenummer: 98440054.9
(22) Anmeldetag: 18.03.1998
(51) Int. Cl.: H04Q 7/00, H04Q 7/32

(54) **Telekommunikationsnetz mit Telekommunikationsanlagen und Funkbasisstationen sowie drahtloses Teilnehmerendgerät dafür**

(71) Anmelder: ALCATEL, 75088 Paris (FR)
(72) Erfinder: Rousseau, Jean-René, 95000 Neuville sur Oise (FR); Riff, Roland, 67100 Strassbourg (FR); Gruner, Richard, 67600 Selestat (FR); Seitz, Matthias, 74379 Ingersheim (DE)
(74) Vertreter: Knecht, Ulrich Karl, Dipl.-Ing.

(57) **Zusammenfassung**

Bei einem Telekommunikationsnetz für drahtlose Kommunikation, das mehrere Telekommunikationsanlagen (TK1, TK2, TK3) enthält, soll auch bei einem Wechsel (sog. externes "handover" oder "roaming") von dem Bereich einer ersten zum Bereich einer zweiten Telekommunikationsanlage das Teilnehmerendgerät unter der einzigen Nummer erreichbar bleiben.

Vorgeschlagen wird nun ein Telekommunikationsnetz, bei dem jedes Teilnehmerendgerät (MS) an die nächstliegende Funkbasisstation (BS) eine Kennung (UIO) aussendet, die angibt zu welcher der Telekommunikationsanlagen (TK1) dieses Teilnehmerendgerät (MS) zugeordnet ist, und bei dem die mit der empfangenden Funkbasisstation verbundene Telekommunikationsanlage (TK3) die Kennung prüft, um festzustellen, daß das Teilnehmerendgerät (MS) einer der anderen Telekommunikationsanlagen (TK1) zugeordnet ist, und um dann eine von dieser anderen Telekommunikationsanlage (TK1) dem Teilnehmerendgerät zugeordneten Nummer (RN) logisch mit einer von ihr dem Teilnehmerendgerät (MS) zugeordneten virtuellen Nummer (VN) zu verknüpfen.

## Beschreibung

Auf dem Gebiet der drahtlosen Telekommunikation sind Telekommunikationsnetzte bekannt, die mehrere miteinander vernetzte Telekommunikationsanlagen und damit verbundene Funkbasistationen enthalten. Beispeilsweise sind hier die sogenannten DECT-Netze zu nennen (Digital Enhanced Cordless Telephone), bei denen eine jede Telekommunikationsanlage mit mehreren DECT-Funkbasistationen verbunden ist, um einen Bereich abzudecken, in dem drahtlose DECT-Teilnehmerendgeräte benutzt werden. Jede Funkbasisstation versorgt eine sogenannte Funkzelle. Innerhalb dieses Bereichs ist ein Wechsel von Funkzelle zu Funkzelle, ein sogenanntes internes "handover", ohne Unterbrechung der Telekommunikation möglich. Außerdem ist das Teilnehmerendgerät innerhalb des Bereichs unter einer einzigen Nummer erreichbar. Es ist wünschenswert, daß auch bei einem Wechsel von dem Bereich einer ersten zum Bereich einer zweiten Telekommunikationsanlage, d.h. beim sogenannten externen "handover" oder auch "roaming", das Teilnehmerendgerät unter der einzigen Nummer erreichbar bleibt.

Vorgeschlagen wird nun ein Telekommunikationsnetz, das mindestens zwei miteinander vernetzte Telekommunikationsanlagen und damit verbundene Funkbasisstationen zur Kommunikations mit drahtlosen Teilnehmerendgeräten enthält, bei dem jedes Teilnehmerendgerät an die nächstliegende Funkbasisstation eine Kennung aussendet, die angibt zu welcher der Telekommunikationsanlagen dieses Teilnehmerendgerät zugeordnet ist, und bei dem die mit der empfangenden Funkbasisstation verbundene Telekommunikationsanlage die Kennung prüft, um festzustellen, daß das Teilnehmerendgerät einer der anderen Telekommunikationsanlagen zugeordnet ist, und um dann eine von dieser anderen Telekommunikationsanlage dem Teilnehmerendgerät zugeordneten Nummer logisch mit einer von ihr dem Teilnehmerendgerät zugeordneten virtuellen Nummer zu verknüpfen.

Außerdem wird eine für das Telekommunikationsnetz verwendbare Telekomunikationsanlage vorgeschlagen, die die empfangene Kennung prüft, um festzustellen, ob das Teilnehmerendgerät einer der anderen Telekommunikationanlage zugeordnet ist, um dann eine von dieser anderen Telekommunikationsanlage dem Teilnehmerendgerät zugeordneten Nummer logisch mit einer von ihr dem Teilnehmerendgerät zugeordneten virtuellen Nummer zu verknüpfen. Zudem wird ein dafür geeignetes Teilnehmerendgerät vorgeschlagen, das an die nächstliegende Funkbasisstation eine Kennung aussendet, die angibt welcher der Telekommunikationsanlagen -im weiteren auch kurz TK-Anlagen genannt- das Teilnehmerendgerät zugeordnet ist.

Dadurch wird erreicht, daß diejenige TK-Anlage, die den momentanen Aufenthaltsbereich, z.B. die Außenstelle einer Firma, versorgt und die nicht die normale TK-Anlage (etwa die TK-Anlage am Zentralstandort der Firma) ist, eine logische Verbindung zwischen diesen beiden TK-Anlagen hergestellt wird, wobei das Teilnehmerendgerät virtuell mit seiner TK-Anlage (am Zentralstandort) verbunden bleibt und unter seiner ihm zugeordneten Nummer erreichbar ist. Die dem Teilnehmer normalerweise zugeordnete TK-Anlage wird im weiteren auch als Heimat-Anlage bezeichnet: Die andere TK-Anlage, die den momentanen Aufenthaltsbereich versorgt wird im weiteren auch kurz als Besuchs-Anlage bezeichnet.

In dem erfindungsgemäßen Telekommunikationsnetz kann sich also ein Teilnehmer mit seinem Teilnehmerendgerät frei bewegen und von einem Versorgungsbereich zu einem nächsten wechseln, wobei er unter einer einzigen Nummer erreichbar bleibt. Es ist besonders vorteilhaft, wenn aus der Heimat-Anlage das Teilnehmerprofil für den Teilnehmer heruntergeladen wird in diejenige Telekommunikationsanlage, die den momentanen Aufenthaltsbereich versorgt, also in die Besuchs-Anlage. Dadurch hat der Teilnehmer Zugriff auf alle die ihm zugeordneten Dienste und Leistungsmerkmale, wie beispielsweise Anklopfen, Makeln, Rufnummernfilter oder auch das sogenannte "least cost routing".

Die Erfindung wird im folgenden nun anhand eines Ausführungsbeispieles und unter Zuhilfenahme der folgenden Figuren beschrieben:
- Fig. 1,: die schematisch den Aufbau eines erfindungsgemäßen Telekommunikationsnetzes zeigt;

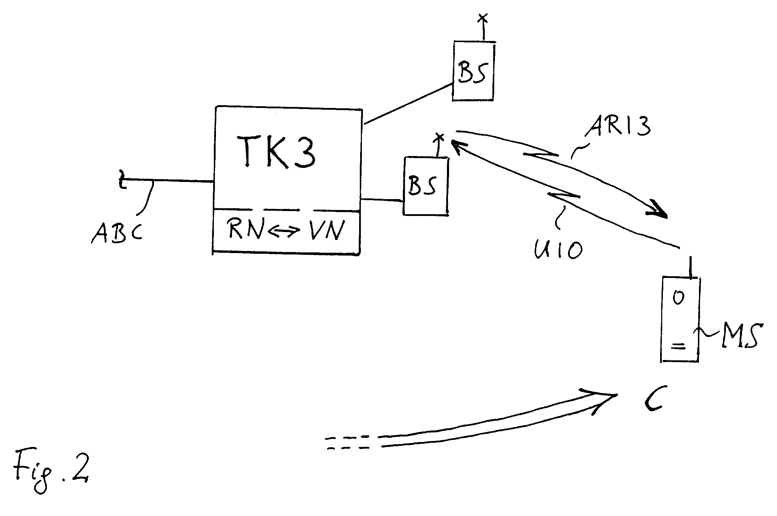

- Fig. 2,: die ausschnittsweise einen Teil dieses Telekommunikationsnetzes genauer darstellt.

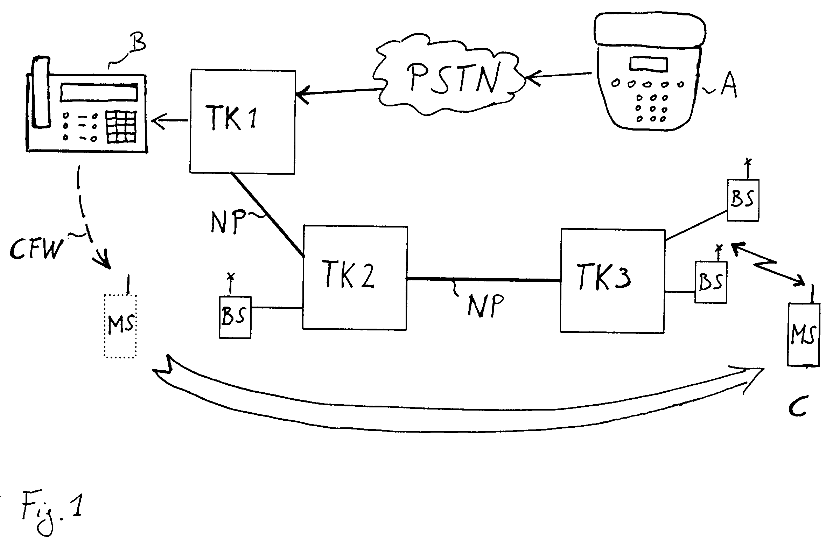

Fig. 1 zeigt ein Telekommunikationsnetz, mit drei Telekommunikationsanlagen TK1 bis TK3, die miteinander vernetzt sind über digitale Verbindungsleitungen, auf denen ein Netzprotokoll NP ausgeführt wird. Das Netzprotokoll NP erlaubt es, daß zwischen den Telekommunikationsanlagen Nutzdaten, Signalisierungsdaten als auch Betriebs- und Konfigurationsdaten ausgetauscht werden können. In dem in Fig. 1 dargestellten Beispiel ist die Telekommunikationsanlage TK1 mit der Telekommunikationsanlage TK2 verbunden, die wiederum mit der Telekommunikationsanlage TK3 verbunden ist.

Jede TK-Anlage ist mit einem externen Telekommunikationsnetz verbindbar. Die TK-Anlage TK1 in Fig. 1 ist beispielsweise mit dem öffentlichen Telekommunikationsnetz PSTN verbunden. Außerdem sind an jede Telekommunikationsanlage Teilnehmerendgeräte angeschlossen, sowohl über Drahtverbindungen als auch über Funkverbindungen. Beispielhaft sind in Fig. 1 einige Funkbasistationen BS dargestellt zum Anschluß von drahtlosen Teilnehmerendgeräten. Beispielhaft ist in Fig. 1 auch ein drahtgebundenes Teilnehmerendgerät dargestellt, das an die TK-Anlage TK1 angeschlossen ist.

Ein in Fig. 1 gezeigtes drahtloses Teilnehmerendgerät MS ist der TK-Anlage TK1 fest zugeordnet, d.h. das Teilnehmerendgerät befindet sich normalerweise im Aufenthaltsbereich, der von der TK-Anlage TK1 versorgt wird. Wechselt nun der Teilnehmer mit seinem drahtlosen Teilnehmerendgerät MS zu einem anderen Aufenthaltsbereich, etwa zum Aufenthaltsbereich der TK-Anlage TK2, so kann er nach herkömmlicher Art eine Rufweiterleitung CFW veranlassen. Dadurch wird zwar erzielt, daß der Teilnehmer nun auch unter seiner Rufnummer an der anderen TK-Anlage TK2 erreichbar ist, jedoch muß der Teilnehmer die Rufweiterleitung selbst veranlassen. Im Beispiel nach Fig.1 würde dann ein für diesen Teilnehmer an der TK-Anlage TK1 eingehender Ruf umgeleitet zur TK-Anlage TK2. Wird etwa von einem Teilnehmerendgerät A des öffentlichen Telekommunikationsnetzes PSTN ein Ruf ausgelöst zur TK-Anlage TK1, so wird der Ruf zunächst an das drahtgebundene Endgerät des Teilnehmers und dann aufgrund der Rufweiterleitung CFW zur TK-Anlage TK2 weitergeleitet. Befindet sich nun der Teilnehmer nicht mehr im Aufenthaltsbereich der TK-Anlage TK2, sondern beispielsweise im Aufenthaltsbereich C der TK-Anlage TK3, so wird erfindungsgemäß wie folgt eine logische Verbindung hergestellt:

Beim Eintritt des Teilnehmerendgerätes MS in den Aufenthaltsbereich C der TK-Anlage TK3 empfängt das Teilnehmerendgerät MS von einer Funkbasisstation BS dieser TK Anlage eine Systemkennung ARI3, wodurch das Teilnehmerendgerät feststellen kann, daß es sich nicht im Aufenthaltsbereich seiner TK-Anlage, d.h. Heimat-Anlage TK1, befindet.

Dann sendet das Teilnehmerendgerät MS eine Kennung UIO, die angibt welcher der TK-Anlagen dieses Teilnehmerendgerät fest zugeordnet ist. Das bedeutet, das die Beuchs-Anlage TK3 erkennt, das dieses Teilnehmerendgerät MS der TK-Anlage TK1 fest zugeordnet ist.

Daraufhin wird von der Besuchs-Anlage, d.h. von der TK-Anlage TK3, über die Vernetzung mittels des Protokolls NP eine Verbindung mit der Heimat-Anlage, d.h. mit der TK-Anlage TK1, aufgebaut. Außerdem weist die Besuchs-Anlage TK3 dem Teilnehmerendgerät MS eine virtuelle Nummer VN zu, um dieses Teilnehmerendgerät MS temporär verwalten zu können, solange sich das Teilnehmerendgerät in dem Aufenthaltsbereich C befindet.

Außerdem fragt die TK Anlage TK3 von der Heimat-Anlage TK1 die dem Teilnehmerendgerät dort fest zugeordnete Rufnummer RN ab, um beide Nummern logisch miteinander zu verknüpfen. Dadurch wird erreicht, daß der Anschluß des Teilnehmerendgerätes MS im Aufenthaltsbereich C virtuell abgebildet wird auf einen fest zugeordneten Teilnehmeranschluß an der Heimat-Anlage TK1. Das bedeutet, daß beispielsweise der in Fig. 1 dargestellte eingehende Ruf von der Heimatanlage TK1 angenommen wird und eine Verbindung zur TK Anlage TK3 des momentanen Aufenthaltsbereiches C aufgebaut wird, wobei das Teilnehmerendgerät MS gleichermaßen behandelt wird, wie jedes andere Endgerät das an die Heimat-Anlage TK1 angeschlossen ist.

Der rufende Teilnehmer am Endgerät des öffentlichen Telekommunikationsnetzes PSTN bemerkt nicht, daß der sich Teilnehmer mit seinem drahtlosen Teilnehmerendgerät nicht im Aufenthaltsbereich seiner Heimat-Anlage TK1 befindet.

Neben der genannten Verknüpfung von der dem Teilnehmerendgerät fest zugeordneten Nummer RN und der virtuellen Nummer VN ruft die Besuchs-Anlage TK3 mit Hilfe des Netzprotokolls NP auch das Teilnehmerprofil aus der Heimat-Anlage TK1 ab. Dieses Profil enthält die dem Teilnehmer oder dem Teilnehmerendgerät MS zugeordneten Dienste und Leistungsmerkmale. Da nun das Profil des Teilnehmers auch in der Besuchs-Anlage TK3 abgespeichert ist, kann der Teilnehmer mit Hilfe seines Teilnehmerendgerätes MS nun auch im momentanen Aufenthaltsbereich C über alle Dienste und Leistungsmerkmale verfügen.

Die beschriebe Erfindung ist also besonders vorteilhaft einsetzbar im Bereich des sogenannten "tele working", bei dem Teilnehmer von ihrer Privatwohnung aus dienstliche Tätigkeiten ausüben und dabei unbeschränkten Zugriff auf die Telekommunikationsanlage ihres Arbeitgebers haben sollen. Beispielsweise kann sich ein Teilnehmer mit seinem Teilnehmerendgerät von dem Büro seiner Firma im Aufenthaltsbereich der Heimat-Anlage TK1 entfernen und zu seiner Privatwohnung im Aufenthaltsbereich C wechseln, ohne daß er eine manuelle Rufweiterleitung veranlassen muß.

Die Erfindung wurde beschrieben anhand von TK-Anlagen, an die räumlich davon abgesetzte Funkbasisstationen angeschlossen sein können. Es ist auch denkbar TK-Anlagen zu verwenden, in die Funkbasisstationen bereits integriert sind. Die Erfindung ist besonders gut einsetzbar im Bereich von zellularen Funknetzen, wie beispielsweise denen nach dem DECT-Standard ausgelegten Funknetzen. Die Vernetzung der TK-Anlagen ist nicht auf kleine räumliche Bereiche, wie beispielsweise ein Firmengelände, beschränkt. Die Vernetzung kann auch über größere Distanzen, beispielsweise zwischen mehreren Städten oder Regionen, erfolgen. Zur Vernetzung können an sich bekannte Strukturen wie LAN, MAN, oder WAN (Local, Metropolitan oder Wide Area Network) verwendet werden.

## Patentansprüche

1. Telekommunikationsnetz, das mindestens zwei miteinander vernetzte Telekommunikationsanlagen (TK1, TK2, TK3) und damit verbundene Funkbasisstationen (BS) zur Kommunikation mit drahtlosen Teilnehmerendgeräten enthält, bei dem jedes Teilnehmerendgerät (MS) an die nächstliegende Funkbasisstation (BS) eine Kennung (UIO) aussendet, die angibt zu welcher der Telekommunikationsanlagen (TK1, TK2, TK3) dieses Teilnehmerendgerät (MS) zugeordnet ist, und bei dem die mit der empfangenden Funkbasisstation verbundene Telekommunikationsanlage (TK3) die Kennung prüft, um festzustellen, daß das Teilnehmerendgerät (MS) einer (TK1) der anderen Telekommunikationsanlagen (TK1, TK2) zugeordnet ist, und um dann eine von dieser anderen Telekommunikationsanlage (TK1) dem Teilnehmerendgerät (MS) zugeordneten Nummer (RN) logisch mit einer von ihr dem Teilnehmerendgerät (MS) zugeordneten virtuellen Nummer (VN) zu verknüpfen.

2. Telekommunikationsnetz nach Anspruch 1, bei dem die Telekommunnikationsanlage (TK3) durch die Verknüpfung der zugeordneten Nummer (RN) mit der virtuellen Nummer (VN) eine Rufweiterleitung veranlaßt für an das Teilnehmerendgerät (MS) gerichtete Rufe, die bei der dem Teilnehmerendgerät zugeordneten anderen Telekommunikationsanlage (TK1) eingehen.

3. Telekommunikationsnetz nach Anspruch 1, bei dem jedes Teilnehmerendgerät (MS) beim Eintritt in den Funkfeldbereich einer der Funkbasisstationen (BS) eine Nachricht aussendet, die die Kennung (UIO) enthält.

4. Telekommunikationsnetz nach Anspruch 1, bei dem jeweils (TK3) eine der Telekommunikationsanlagen (TK1, TK2, TK3) zusammen mit den mit ihr verbundenen Funkbasisstationen (BS) ein Funksystem bilden, das eine Systemkennung (ARI3) hat, die diese Funkbasisstationen aussenden.

5. Telekommunikationsnetz nach Anspruch 4, bei dem jedes Teilnehmerendgerät (MS) zumindest dann seine Kennung (UIO) aussendet, wenn es eine Systemkennung (ARI3) empfängt, die nicht diejenige Telekommunikationsanlage angibt, der das Teilnehmerendgerät (MS) zugeordnet ist.

6. Telekommunikationsnetz nach Anspruch 1, bei dem die Telekommunikationsanlage (TK3), zu der das Teilnehmerendgerät (MS) seine Kennung sendet, von der ihm zugeordneten Telekommunikationsanlage (TK1) ein darin für das Teilnehmerendgerät (MS) gespeichertes Profil abruft, das zugelassene Dienste und/oder Leistungsmerkmale angibt.

7. Telekommunikationsnetz nach Anspruch 1, bei dem die virtuelle Nummer (VN) Teil eines Nummernblocks ist, der für Teilnehmerendgeräte reserviert ist, die der Telekommunikationsanlage (TK3) nicht fest zugeordnet sind.

8. Telekommunikationsnetz nach Anspruch 7, bei dem die Größe des reservierten Nummernblocks nichtlinear abhängig ist von der Größe des Gesamtnummernblocks der Telekommunikationsanlage (TK3).

9. Telekomunikationsanlage (TK3), die für den Aufbau eines Telekommunikationnetzes mit mindestens einer weiteren Telekommunikationsanlage (TK1, TK2, TK3) vernetzt ist, und die mit Funkbasisstationen (BS) zur Kommunikations mit drahtlosen Teilnehmerendgeräten verbunden ist, von denen jedes (MS) eine Kennung (UIO) aussendet, die angibt zu welcher der Telekommunikationsanlagen (TK1) dieses Teilnehmerendgerät (MS) zugeordnet ist, und die die empfangene Kennung prüft, um festzustellen, daß das Teilnehmerendgerät (MS) einer der anderen Telekommunikation (TK1) zugeordnet ist, und um dann eine von dieser anderen Telekommunikationsanlage (TK1) dem Teilnehmerendgerät zugeordneten Nummer (RN) logisch mit einer von ihr dem Teilnehmerendgerät (MS) zugeordneten virtuellen Nummer (VN) zu verknüpfen.

10. Drahtloses Teilnehmerendgerät (MS) für ein Telekommunikationnetz mit mindestens zwei miteinander vernetzte Telekommunikationsanlagen (TK1, TK2, TK3) und damit verbundene Funkbasisstationen (BS) zur Kommunikations mit dem drahtlosen Teilnehmerendgerät (MS) enthält, das an die nächstliegende Funkbasisstation (BS) eine Kennung (UIO) aussendet, die angibt zu welcher der Telekommunikationsanlagen (TK1) das Teilnehmerendgerät (MS) zugeordnet ist, damit die mit der empfangenden Funkbasisstation verbundene Telekommunikationsanlage (TK3) die Kennung prüft, um festzustellen, daß das Teilnehmerendgerät (MS) einer der anderen Telekommunikationsanlagen (TK1) zugeordnet ist, und um dann eine von dieser anderen Telekommunikationsanlage (TK1) dem Teilnehmerendgerät zugeordneten Nummer (RN) logisch mit einer von ihr dem Teilnehmerendgerät (MS) zugeordneten virtuellen Nummer (VN) zu verknüpfen.
